# EUROPEAN PATENT SPECIFICATION

(11) **EP 0 560 170 B1**
(45) Date of publication and mention of the grant of the patent: **07.10.1998**
(21) Application number: 93103254.4
(22) Date of filing: 02.03.1993
(51) Int. Cl.: H04N 5/14

(54) **Method and apparatus for sharpness enhancement**
Verfahren und Vorrichtung zur Schärfeverbesserung
Méthode et dispositif pour améliorer la netteté d'une image

(30) Priority: 09.03.1992 EP 92400606
(43) Date of publication of application: 15.09.1993
(73) Proprietor: THOMSON multimedia, 92648 Boulogne Cédex (FR)
(72) Inventor: Wendling, Bertrand, F-67850 Offendorf (FR)
(74) Representative: Hartnack, Wolfgang, Dipl.-Ing.

(56) References cited:
- EP-A- 0 114 961
- EP-A- 0 342 511
- GB-A- 2 203 013
- PATENT ABSTRACTS OF JAPAN vol. 13, no. 176 (E-749)(3524) 25 April 1989 & JP-A-01 005 168 (TOSHIBA) 10 January 1989

## Description

The present invention relates to a method and to an apparatus for sharpness enhancement.

### Background

In DE-B-3307014 a circuit for increasing the horizontal sharpness in a VCR is disclosed in which a correction signal derived from a double-differentiated input signal is added to this input signal. To reduce distortions in case of large transitions small transitions are amplified more than larger transitions. But thereby the circuit becomes very noise sensitive.
JP-A-01005168 discloses a contour compensating circuit in which according to a linear function a share of an input pixel value is combined with this input pixel value in order to get an emphasized contour. The linear function does not influence small input values which are regarded as representing noise. In order to distinguish between noise and a true picture content the value of the current input pixel is correlated with the values of its horizontal and vertical neighbour pixels. The contour emphasizing function is enabled only if the current pixel is correlated with at least one of the above neighbour pixels.
GB-A-2203013 discloses an aperture correction circuit for a video source, e.g. a camera. A non-linear function is used which includes a maximum correction value.

### Invention

It is one object of the invention to disclose an improved method of sharpness enhancement, whereby the noise sensitivity is reduced. This object is achieved by the method disclosed in claim 1.

In principle the inventive method consists of a kind of sharpness enhancement, whereby correction values derived from the difference between spatially neighboured pixel values are combined with said pixel values and said correction values are calculated according to a non-linear function of said difference values and said pixel values are modified only if at minimum one of the surrounding pixels is correlated with the actual pixel, whereby said correction values are limited to a maximum correction value and said correction value is added to and subtracted from, respectively, said neighboured pixel values in a symmetrical way to improve the appearing sharpness of the resulting transition.

Advantageous additional embodiments of the inventive method are resulting from the respective dependent claims.

It is a further object of the invention to disclose an apparatus which utilizes the inventive method. This object is achieved by the apparatus disclosed in claim 4.

In principle the inventive apparatus comprises storage means which output the required pixel values for a correlation detector and a correction function calculator, whereby the respective difference values between the actual pixel and the surrounding pixels are calculated and compared with a noise threshold which is stored in said correlation detector or fed to this correlation detector via a threshold input, and whereby said correlation detector enables, if one of said difference values is below said noise threshold, said correction function calculator which outputs respective neighboured pixels values to which said correction value is added and from which said correction value is subtracted, respectively, whereby said correlation function calculator stores and/or receives at respective inputs said threshold values and said correction factors.

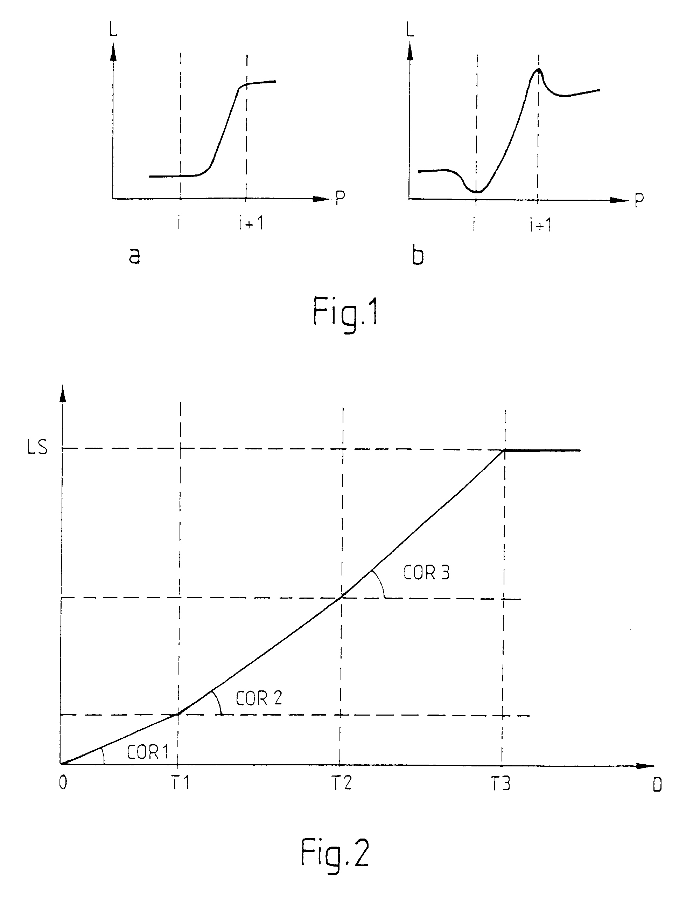

The contrast of pictures is enhanced by modifying the luminance value at transitions in horizontal direction. As can be seen from Fig. 1 the edge profile of Fig. 1a is modified to give a more significant amplitude to the transition according to Fig. 1b. The final correction A is the effective value of changing.
The processing is carried out line per line and pixel per pixel. The luminance signal is coded with e.g. eight bits between 0 (black) and 255 (white). Starting from a pixel i the following calculation is made:
D (delta) is the luminance difference between pixel i and pixel i+1. The value of D determines the raw correction factor S (shift). The sign of D determines also the sign of the final correction A.
If the absolute value of D is less then a first threshold T1, correction factor S will be D*COR1. COR1 is a first preselected correction factor.
If the absolute value of D is between T1 and a second, higher threshold T2, correction factor S will be D*COR2-T1*(COR2-COR1). COR2 is a second preselected correction factor.
If the absolute value of D is greater than T2, correction factor S will be D*COR3-T1*(COR2-COR1)-T2*(COR3-COR2). COR3 is a third preselected correction factor.
In any case correction factor S is limited to a maximum correction threshold LS (Lshift) which will be reached at a third threshold T3 for D.

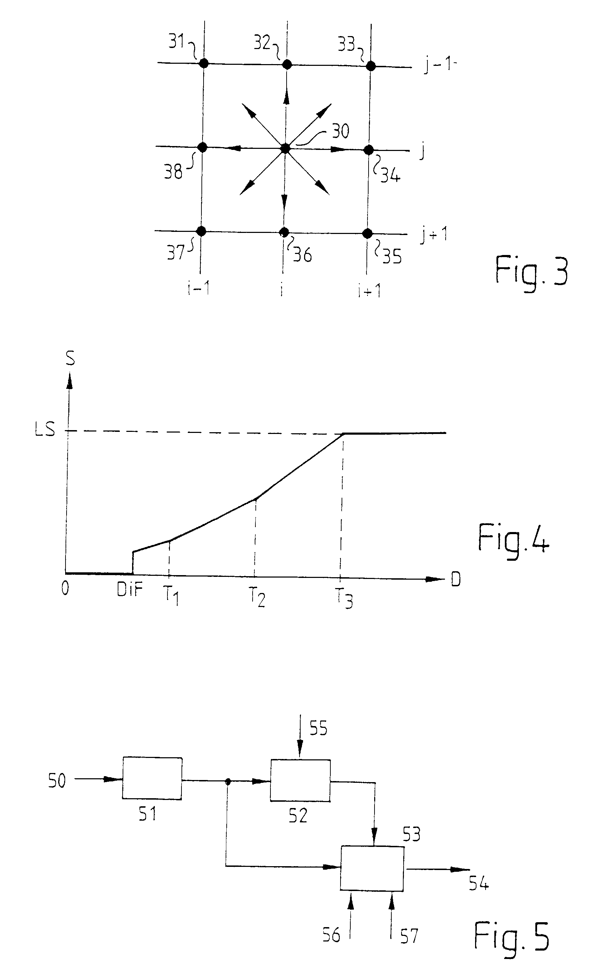

In noisy pictures the raw correction described above will increase the noise as well as true transitions. Therefore a detection of the noise level is required together with a modification of the correction factor calculation. The following two methods can be used or can be used combined:
1) A correlation is investigated between the processed pixel 30 and its surrounding pixels 31 - 38 in eight directions according to Fig. 3. Thereby the amplification of "pixel noise" is prevented. Respective eight absolute difference values between pixel 30 and the other pixels are calculated. If each difference value is greater than a preselected noise threshold NT the pixel 30 is considered as uncorrelated and will not be processed according to the raw correction. If pixel 30 is correlated in at minimum one direction (difference value below NT) it is allowed to be processed and A is set to A = S.
2) The processing width over a certain level of transitions is limited to reduce the amplification of low level, but several pixel wide noise. Only if D is greater than a preselected fourth threshold DIF the correction is carried out. The resulting discontinuity of the correction function according to Fig. 4 is almost invisible because it takes place only within the range of small correction values. E.g. a 30% correction of a DIF value under 7 will generate an error of less than two units (LSB).

If all conditions are satisfied the correction for pixel 30 will be done. If the transition is black→white the luminance value of pixel i is decreased and the luminance value for pixel i+1 is increased (Fig. 1). The value of correction is calculated as described above. The correction is carried out symmetrically. If the transition is white→black the correction is done the other way around. The correction is also limited to 0 and 255 in case of 8 bit values.

### Drawings

Preferred embodiments of the invention are described with reference to the accompanying drawings, in which:
- Fig. 1: shows an edge profile without and with sharpness improving;
- Fig. 2: depicts a raw correlation function;
- Fig. 3: shows pixels involved in correlation function;
- Fig. 4: shows an improved correction function;
- Fig. 5: depicts the block diagram of a sharpness enhancer.

### Preferred embodiments

The following parameter values have proved to give good results:
NT = 15, DIF = 7, COR1 = 0.3, COR2 = 0.9, COR3 = 1.3,
T1 = 15, T2 = 25, T3 = LS = 30.

From input 50 in Fig. 5 pixel values are fed to a store 51 which outputs the required pixel values for correlation detector 52 and correction function calculator 53. The respective difference values between pixel 30 and the surrounding pixels 31 - 38 are calculated and compared with noise threshold 55 (NT). If one of the difference values is below NT, correlation function calculator 53 is enabled and outputs pixels values i and i+1 with correction A, which has been calculated with a correction function according to Fig. 4. If the correlation function calculator 53 is disabled, pixel i (and pixel i+1, if not corrected) is fed to output 54.
Correlation function calculator 53 receives values T1, T2, T3, COR1, COR2 and/or COR3 from input 56 and/or value DIF from input 57. Some or all of these values and/or value NT can also be stored or hard wired within the respective circuits.

Depending on the average noise level the parameters can be changed adaptively.

The invention can also be applied to chroma signals and/or to sharpness enhancement in vertical direction.

## Claims

1. Method for improving the apparent sharpness of brightness transitions in line-structured picture signals, wherein with respect to a current pixel (30) in each case a correction value (S) is added to or subtracted from values of spatially neighboured pixels (31-38) in a such a way that the value for the pixel at the black side of a brightness transition is decreased and the value for the pixel at the bright side of the brightness transition is increased, and wherein said correction value (S) is derived from the difference value (D) between the value of said current pixel (30) and the value of a spatially neighboured pixel (34) and said correction value (S) is calculated from said difference value (D) using a predetermined function and the value of the current pixel is modified only if at least one value of the spatially neighboured pixels (31-38) is correlated with the value of the current pixel (30), said correlation being assumed to be true if the difference amount between said at least one value of the spatially neighboured pixels and the value of said current pixel is smaller than a first threshold (NT), **characterised** in that the value of the current pixel is modified only if the amount of said difference value (D) exceeds a second threshold (DIF) and that said predetermined function includes a limit value (LS) for a maximum correction and that in its non-zero part corresponding to said difference value (D) greater than said second threshold (DIF) said predetermined function consists, between said second threshold (DIF) and further successively higher thresholds (T1, T2, T3) for said difference value (D), of several linear partitions having gradients ascending with ascending input difference value (D), and that in said correlation in addition to the values of horizontally (34, 38) and vertically neighboured pixels (32, 36) also the values of diagonally neighboured pixels (31, 33, 35, 37) are included.

2. Method according to claim 1, wherein the lowest linear partition of the non-zero part of said predetermined function starts with a value greater than zero, thereby causing a discontinuity at an input level corresponding to said second threshold (DIF).

3. Method according to claim 1 or 2, wherein the sharpness enhancement processing is applied in horizontal and/or vertical direction.

4. Apparatus for improving the apparent sharpness of brightness transitions in line-structured picture signals, comprising:
- storage means (51) which output pixel values of said picture signals required for a correlation detector (52) and a correction function calculator (53);
- said correction function calculator (53), wherein with respect to a current pixel (30) in each case a correction value (S) is added to or subtracted from values of spatially neighboured pixels (31-38) in a such a way that the value for the pixel at the black side of a brightness transition is decreased and the value for the pixel at the bright side of the brightness transition is increased, and which derives said correction value (S) from the difference value (D) between the value of said current pixel (30) and the value of a spatially neighboured pixel (34) and which calculates from said difference value (D) said correction value using a predetermined function and which modifies the value of the current pixel only if enabled by the correlation detector;
- said correlation detector (52) which compares difference amounts between the value of said current pixel (30) and values of the spatially neighboured pixels (31 - 38) with a first threshold (NT) which is stored in or fed via a threshold input (55) to said correlation detector, and which enables the modification of the value of the current pixel in said correction function calculator if for at least one of the spatially neighboured pixels (31 - 38) the difference amount between the value of said at least one of the spatially neighboured pixels and the value of said current pixel is smaller than said first threshold;
**characterised** in that the value of said current pixel is modified only if the amount of said difference value (D) exceeds a second threshold (DIF) and that said predetermined function includes a limit value (LS) for a maximum correction and that in its non-zero part corresponding to said difference value (D) greater than said second threshold (DIF) said predetermined function consists, between said second threshold (DIF) and further successively higher thresholds (T1, T2, T3) for said difference value (D), of several linear partitions having gradients ascending with ascending input difference value (D), and that said correlation detector (52) compares, in addition to difference values for horizontally (34, 38) and vertically neighboured pixels (32, 36), also difference values for the diagonally neighboured pixels (31, 33, 35, 37) with said first threshold (NT).

5. Apparatus according to claim 4, in which said correction function calculator (53) stores and/or receives at respective inputs (56, 57) said second and further threshold values (DIF, T1, T2, T3).

## Patentansprüche

1. Verfahren zur Verbessern der scheinbaren Schärfe von Helligkeitsübergängen in zeilenstrukturierten Bildsignalen, wobei in bezug auf ein gegenwärtiges Pixel (30) in jedem Fall ein entsprechender Wert (S) zu Werten von räumlich benachbarten Pixeln (31 - 38) in solcher Weise hinzugefügt oder von diesen abgezogen wird, daß der Wert für das Pixel an der schwarzen Seite eines Helligkeitsübergangs vermindert und der Wert für das Pixel an der hellen Seite des Helligkeitsübergangs erhöht wird, und wobei der Korrekturwert (S) von dem Unterschiedswert (D) zwischen dem Wert des gegenwärtigen Pixels (30) und dem Wert eines räumlich benachbarten Pixels (34) abgeleitet und der Korrekturwert (S) aus dem Unterschiedswert (D) unter Verwendung einer vorgegebenen Funktion berechnet wird, und wobei der Wert des gegenwärtigen Pixels nur modifiziert wird, wenn wenigstens ein Wert der räumlich benachbarten Pixel (31 - 38) mit dem Wert des gegenwärtigen Pixels (30) korreliert wird, wobei die Korrelation als richtig angenommen wird, wenn der Unterschiedsbetrag zwischen dem wenigstens einen Wert der räumlich benachbarten Pixel und dem Wert des gegenwärtigen Pixels kleiner als ein erster Schwellenwert (NT) ist, dadurch gekennzeichnet, daß der Wert des gegenwärtigen Pixels nur modifiziert wird, wenn der Betrag des Unterschiedswertes (D) einen Zweit-Schwellenwert (DIF) überschreitet, und daß die vorgegebene Funktion einen Grenzwert (LS) für eine maximale Korrektur enthält, und daß die vorgegebene Funktion in ihrem Nicht-Null-Teil, der dem Unterschiedswert (D) entspricht, der größer als der zweite Schwellenwert (DIF) ist, zwischen dem zweiten Schwellenwert (DIF) und weiteren sukzessiv höheren Schwellenwerten (T1, T2, T3) für den Unterschiedswert (D) aus mehreren linearen Unterteilungen besteht, die Gradienten haben, die mit zunehmenden Eingangs-Unterschiedswert (D) ansteigen, und daß in der Korrelation zusätzlich zu den Werten von horizontal (34, 38) und vertikal benachbarten Pixeln (32, 36) auch die Werte von diagonal benachbarten Pixeln (31, 33, 35, 37) eingeschlossen sind.

2. Verfahren nach Anspruch 1, bei dem die niedrigste lineare Unterteilung des Nicht-Null-Teils der vorgegebenen Funktion mit einem Wert größer als null beginnt, wodurch eine Diskontinuität an einem Eingangspegel erzeugt wird, der dem zweiten Schwellenwert (DIF) entspricht.

3. Verfahren nach Anspruch 1 oder 2, bei dem die Schärfeverbesserungs-Verarbeitung in horizontaler und/oder vertikaler Richtung angewendet wird.

4. Vorrichtung zur Verbesserung der scheinbaren Schärfe von Helligkeitsübergängen in zeilenstrukturierten Bildsignalen, umfassend:
- Speichermittel (51), die Pixelwerte der Bildsignale ausgeben, die für einen Korrelationsdetektor (52) und einen Korrekturfunktions-Rechner (53) benötigt werden;
- den Korrekturfunktions-Rechner (53), wobei in bezug auf ein gegenwärtiges Pixel (30) in jedem Fall ein Korrekturwert (S) zu Werten von räumlich benachbarten Pixeln (31 - 38) in solcher Weise hinzugefügt oder von diesen abgezogen wird, daß der Wert für das Pixel an der schwarzen Seite eines Helligkeitsübergangs vermindert und der Wert für das Pixel an der hellen Seite des Helligkeitsübergangs erhöht wird, und der den Korrekturwert (S) von dem Unterschiedswert (D) zwischen dem Wert des gegenwärtigen Pixels (30) und dem Wert eines räumlich benachbarten Pixels (34) ableitet, und der den Korrekturwert aus dem Unterschiedswert (D) unter Verwendung einer vorgegebenen Funktion berechnet, und der den Wert des gegenwärtigen Pixels nur modifiziert, wenn er durch den Korrelationsdetektor freigegeben wird;
- den Korrelationsdetektor (52), der Unterschiedsbeträge zwischen dem Wert des gegenwärtigen Pixels (30) und Werten der räumlich benachbarten Pixel (31 - 38) mit einem ersten Schwellenwert (NT) vergleicht, der in dem Korrelationsdetektor gespeichert ist oder diesem über einen Schwellenwert-Eingang (55) zugeführt wird, und der die Modifizierung des Wertes des gegenwärtigen Pixels in dem Korrekturfunktions-Rechner freigibt, wenn für wenigstens eines der räumlich benachbarten Pixel (31 - 38) der Differenzbetrag zwischen dem Wert des wenigstens einen der räumlich benachbarten Pixel und dem Wert des gegenwärtigen Pixels kleiner als der erste Schwellenwert ist;
dadurch gekennzeichnet, daß der Wert des gegenwärtigen Pixels nur modifiziert wird, wenn der Betrag des Unterschiedswertes (D) einen zweiten Schwellenwert (DIF) überschreitet, und daß die vorgegebene Funktion einen Grenzwert (LS) für eine maximale Korrektur enthält, und daß die vorgegebene Funktion in ihrem Nicht-Null-Teil, der dem Unterschiedswert (D) entspricht, der größer als der zweite Schwellenwert (DIF) ist, zwischen dem zweiten Schwellenwert und weiteren sukzessiv höheren Schwellenwerten (T1, T2, T3) für den Unterschiedswert (D) aus mehreren linearen Unterteilungen besteht, die Gradienten haben, die mit zunehmendem Eingangs-Unterschiedswert (D) ansteigen, und daß der Korrelationsdetektor (52) zusätzlich zu Differenzwerten für horizontal (34, 38) und vertikal benachbarte Pixel (32, 36) auch Unterschiedswerte für die diagonal benachbarten Pixel (31, 33, 35, 37) mit dem ersten Schwellenwert (NT) vergleicht.

5. Vorrichtung nach Anspruch 4, bei der der Korrekturfunktions-Rechner (53) den zweiten und die weiteren Schwellenwerte (DIF, T1, T2, T3) speichert und/oder an entsprechenden Eingängen (56, 57) empfängt.

## Revendications

1. Méthode d'amélioration de la netteté apparente des transitions de luminosité dans des signaux d'image à structure de ligne, où, par rapport au pixel actuel (30) une valeur de correction (S) est ajoutée ou soustraite dans tous les cas des valeurs des pixels voisins dans les directions spatiales (31-38), de telle manière que la valeur du pixel du côté sombre de la transition de luminosité soit diminuée et que la valeur du pixel du côté clair de la transition de luminosité soit augmentée, où ladite valeur de correction (S) est déduite de la valeur de la différence (D) entre la valeur dudit pixel courant (30) et la valeur d'un pixel voisin au sens spatial du terme (34), où ladite valeur de correction (S) est calculée à partir de ladite valeur de la différence (D) à l'aide d'une fonction prédéfinie et où la valeur du pixel courant n'est modifiée que si l'une au moins des valeurs des pixels voisins au sens spatial du terme (31-38) est corrélée à la valeur du pixel courant (30), ladite corrélation étant supposée vraie si la valeur de la différence entre l'une au moins desdites valeurs des pixels voisins au sens spatial du terme et la valeur dudit pixel courant est inférieure à un premier seuil (NT), caractérisée par le fait que la valeur dudit pixel courant n'est modifiée que si la valeur de ladite différence (D) est supéneure à un second seuil (DIF) et que ladite fonction prédéfinie comporte une valeur limite (LS) de correction maximale et que la partie non nulle correspondant à une valeur de ladite différence (D) supérieure audit second seuil (DIF) de ladite fonction prédéfinie comporte, entre un dit second seuil (DIF) et plusieurs seuils successifs (T1, T2, T3) de valeurs supérieures pour ladite valeur de la différence (D), plusieurs parties linéaires dont la pente augmente avec la valeur de la différence d'entrée (D) et que, outre les valeurs des pixels voisins dans le sens horizontal (34, 38) et vertical (32, 36), les valeurs des pixels voisins en diagonale (31, 33, 35, 37) interviennent.

2. Méthode selon la revendication 1, où la partie linéaire inférieure de la partie non nulle de ladite fonction prédéfinie commence à une valeur différente de zéro, provoquant une discontinuité à un niveau d'entrée correspondant audit second seuil (DIF).

3. Méthode selon les revendications 1 ou 2, où le traitement d'amélioration de la netteté est appliqué dans la direction verticale et/ou la direction horizontale.

4. Dispositif d'amélioration de la netteté apparente des transitions de luminosité dans des signaux d'image à structure de ligne comportant :
- un dispositif de stockage (51) qui génère en sortie des valeurs des pixels desdits signaux d'image nécessaires au détecteur de corrélation (52) et au dispositif de calcul de la fonction de correction (53),
- un dit dispositif de calcul de la fonction de correction (53) où, par rapport à la valeur du pixel courant (30) une valeur de correction (S) est ajoutée ou soustraite dans tous les cas des valeurs des pixels voisins au sens spatial du terme (31-38), de telle manière que la valeur du pixel du côté sombre de la transition de luminosité soit diminuée et que la valeur du pixel du côté clair de la transition soit augmentée, et qui déduit ladite valeur de correction (S) de la valeur de la différence (D) entre la valeur dudit pixel courant (30) et la valeur d'un pixel proche au sens spatial du terme (34) et qui calcule à partir de ladite valeur de la différence (D) ladite valeur de correction à l'aide d'une fonction prédéfinie et modifie la valeur du pixel courant uniquement s'il est activé par le détecteur de corrélation,
- un dit détecteur de corrélation (52) qui compare les valeurs des différences entre la valeur dudit pixel courant (30) et les valeurs des pixels voisins au sens spatial du terme (31- 38) à un premier seuil (NT) qui est stocké ou introduit dans ledit détecteur de corrélation par l'intermédiaire d'une entrée de seuil, et qui autorise la modification de la valeur du pixel courant dans ledit dispositif de calcul de la fonction de correction si pour l'un au moins des pixels voisins au sens spatial du terme (31-38), la valeur de la différence entre la valeur de l'un au moins desdits pixels voisins et la valeur dudit pixel courant est inférieure à un premier seuil,
**caractérisé** par le fait que la valeur dudit pixel courant n'est modifiée que si la valeur de ladite différence (D) est supérieure à un second seuil (DIF), que ladite fonction prédéfinie comporte une valeur limite (LS) de la correction maximale et que la partie non nulle correspondant à une valeur de ladite différence (D) supérieure audit second seuil (DIF) de ladite fonction prédéfinie comporte entre un dit second seuil (DIF) et plusieurs seuils successifs de valeurs supérieures pour ladite valeur de la différence (D), plusieurs parties linéaires dont la pente augmente avec la valeur de la différence d'entrée (D) et que, outre les valeurs des différences avec les pixels voisins dans le sens horizontal (34, 38) et vertical (32, 36), les valeurs des différences avec les pixels voisins en diagonale (31, 33, 35, 37) sont également comparées avec ledit premier seuil (NT).

5. Dispositif selon la revendication 4, dans lequel ledit dispositif de calcul de la fonction de correction (53) stocke et/ou reçoit sur ses entrées respectives (56, 57) les valeurs dudit second seuil et desdits autres seuils (DIF, T1, T2, T3).
